(19) **Europäisches Patentamt / European Patent Office / Office européen des brevets**

(11) **EP 4 339 892 A1**

(12) # EUROPEAN PATENT APPLICATION

(43) Date of publication:
**20.03.2024 Bulletin 2024/12**

(21) Application number: **23197881.8**

(22) Date of filing: **18.09.2023**

(51) International Patent Classification (IPC):
***G06T 7/73*** (2017.01)

(52) Cooperative Patent Classification (CPC):
**G06T 7/75;** G06T 2207/20081; G06T 2207/20084;
G06T 2207/30196

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.09.2022 US 202263408037 P
08.09.2023 US 202318244142**

(71) Applicant: **Deepmotion, Inc.
San Mateo, CA 94402 (US)**

(72) Inventors:
• **HE, Kaichuan
Burlingame, California (US)**
• **LI, Zenan
San Jose, California (US)**
• **KORCZ, Mikolaj
Siemianowice Slaskie (PL)**
• **STEPIEN, Jakub
Gliwice (PL)**
• **KABZA, Grzegorz
Kraków (PL)**
• **HULIST, Marcin
Tychy (PL)**

(74) Representative: **Forresters IP LLP
Skygarden
Erika-Mann-Straße 11
80636 München (DE)**

(54) **METHODS AND SYSTEMS FOR DETECTING 3D POSES FROM 2D IMAGES AND EDITING 3D POSES**

(57) Apparatuses, systems, and techniques to calculate a second set of coordinates for each of one or more landmarks that each include a first set of coordinates and were obtained at least in part from one or more machine learning processes. The first set of coordinates includes a first z coordinate that is uncoupled from first x and y coordinates. The second set of coordinates includes second x, y, and z coordinates that are coupled with one another. A rotoscoping tool may be used to edit the first and/or second sets of coordinates. The rotoscoping tool may generate a graphical user interface ("GUI") that allows a user to edit only a z coordinate, which may cause the rotoscoping tool to automatically determine x and y coordinates.

Standard Pinhole Camera Model
**FIG. 1**

EP 4 339 892 A1

**Description**

CROSS REFERENCE TO RELATED APPLICATION(S)

This application claims the benefit of U.S. Provisional Patent Application No. 63/408,037, filed on September 19, 2022, titled ROTOSCOPING POSE EDITING METHOD VIA HYBRID PLANER AND DEPTH COMPONENTS which is incorporated herein by reference in its entirety.

BACKGROUND

Technical Field

At least one embodiment is directed generally to detecting a three dimensional (3D) pose of a subject (e.g., living or inanimate) from two dimensional (2D) input images, such as frames of a video. At least one embodiment discloses a rotoscoping style editing tool that may be used to edit at least a portion of the 3D pose.

Description of the Related Art

Machine learning based processes, such as pose estimation, may be used to detect a pose of a subject from image data for many purposes, such as animation and motion capture. Quality and/or accuracy of estimated poses output by machine learning based processes may be improved.

BRIEF DESCRIPTION OF THE SEVERAL VIEWS OF THE DRAWING(S)

Various embodiments in accordance with the present disclosure will be described with reference to the following drawings.

FIG. 1 is a diagram illustrating components of a first pinhole camera model that may be used to model image capture device(s) depicted in FIG. 10.
FIG. 2 is a diagram illustrating components of a second pinhole camera model that may be used to model the image capture device(s) depicted in FIG. 10.
FIG. 3 is a diagram illustrating components of a thin lens approximation model.
FIG. 4 depicts the second pinhole camera model of FIG. 2 labeled with variable names to help aid in understanding a method depicted in FIG. 11.
FIG. 5 illustrates a 2D view generated by a rotoscoping tool implemented by the system of FIG. 10.
FIG. 6 illustrates a 2D Gizmo displayed by the 2D view of FIG. 5 that may be used by a user to reposition a landmark (e.g., joint or definitive vertex) along x and/or y axes.
FIG. 7 illustrates a 3D view generated by the rotoscoping tool implemented by the system of FIG. 10.
FIG. 8 illustrates a depth marker displayed by the 3D view of FIG. 7 that is usable by a user to reposition a landmark (e.g., joint or definitive vertex) along a projection direction to change its depth (or z coordinate).
FIG. 9 is a diagram of a hardware platform that may be used to implement the system of FIG. 10.
FIG. 10 depicts an example system that may be used to automatically detect a pose of a subject from one or more input image(s) and/or may provide a tool for editing the pose.
FIG. 11 is a flow diagram of a method that may be performed by the example system.

Like reference numerals have been used in the figures to identify like components.

DETAILED DESCRIPTION

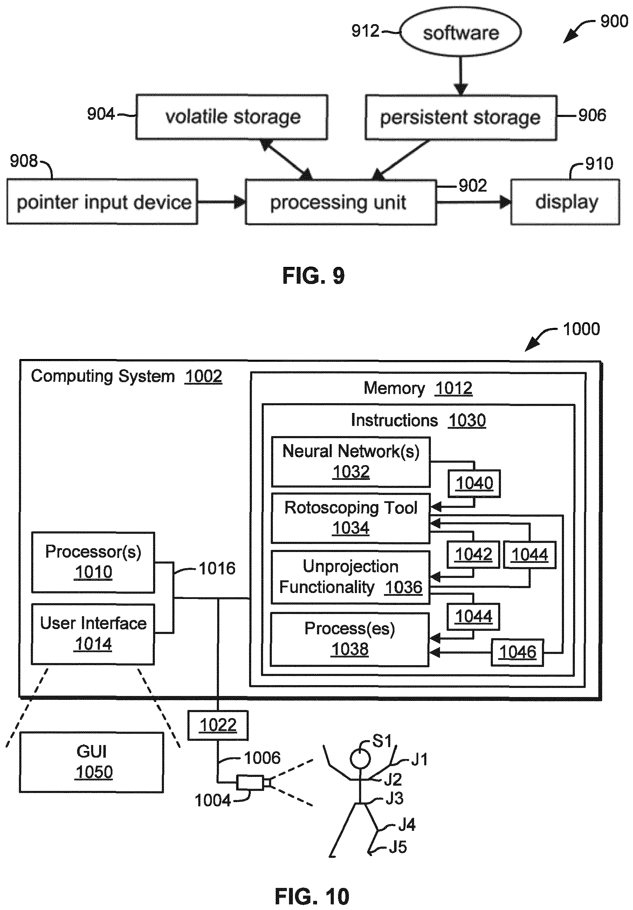

FIG. 10 depicts an example system 1000 that may be used to automatically detect a pose of a subject S1 from an input image and/or may provide a tool for editing that pose. The system 1000 includes a computing system 1002 and one or more image capture devices 1004 (e.g., a camera, a video camera, and/or the like). The image capture device(s) 1004 may be used to capture image data 1022 of the subject S1. By way of a non-limiting example, the image data 1022 may include color (e.g., red, green, blue ("RGB")) image data, black and white image data, and/or the like. While in FIG. 10, the computing system 1002 is illustrated as being connected to the image capture device(s) 1004 by a wired and/or wireless connection 1006 and as transferring the image data 1022 to the computing system 1002 via the connection 1006, alternatively or additionally, the image capture device(s) 1004 may not be connected directly to the computing system 1002. For example, the image capture device(s) 1004 may be connected to the computing system 1002 via a network and/or one or more other devices and may transfer the image data 1022 to the computing system 1002 via the network and/or the other device(s). By way of another non-limiting example, the image capture device(s) 1004 may be used to store the image data 1022 on a storage medium (e.g., memory, a storage device, and/or the like) and the computing system 1002 may obtain the image data 1022 from the storage medium.

The subject S1 is oriented within the real-world in a real-world pose. The subject S1 may include one or more joints (e.g., joints J1-J5). The subject S1 may be a human being, an animal with or without joints, a jointed device (e.g., a robot, a linkage, and/or the like), a device without joints, an inanimate object, and/or the like.

The computing system 1002 may include one or more processors 1010, memory 1012, and a user interface 1014. The processor(s) 1010 may include one or more circuits that perform at least a portion of the instructions 1030 stored in the memory 1012. The processor(s) 1010 may be implemented, for example, using a processing unit 902 (see FIG. 9), a main central processing unit ("CPU") complex, one or more microprocessors, one or more microcontrollers, one or more parallel processing units ("PPU(s)") (e.g., one or more graphics processing units ("GPU(s)")), one or more arithmetic logic units ("ALU(s)"), and/or the like. The memory 1012 (e.g., one or more non-transitory processor-readable medium) may store processor executable instructions 1030 (e.g., software 912 illustrated in FIG. 9) that when executed by the processor(s) 1010 implement one or more machine learning or artificial intelligence ("AI") algorithms (e.g., one or more neural networks 1032), an editing tool (referred to as a rotoscoping tool 1034), unprojection functionality 1036, one or more processes 1038, and/or the like. By way of additional non-limiting examples, referring to FIG. 9, the memory 1012 (e.g., one or more non-transitory processor-readable medium) may be implemented, for example, using volatile storage 904 (e.g., dynamic random-access memory ("DRAM")) and/or persistent storage 906 (e.g., a hard drive, a solid-state device ("SSD"), and/or the like). Returning to FIG. 10, the user interface 1014 may include a display device 910 (see FIG. 9) that a user may use to view information generated and/or displayed by the computing system 1002. The user interface 1014 may include one or more devices, such as a pointer input device 908 (see FIG. 9), that the user may use to input information into the computing system 1002. The processor(s) 1010, the memory 1012, and/or the user interface 1014 may communicate with one other over one or more connections 1016, such as a bus, a Peripheral Component Interconnect Express ("PCIe") connection (or bus), and/or the like.

The instructions 1030 (e.g., the software 912) may be stored in the persistent storage 906, run on the processing unit 902 at runtime, accept user input from the pointer input device 908, make use of the volatile storage 904 as needed, and display output on the display device 910.

The system 1000 may be implemented by a specific type of suitable hardware system that includes and/or implements virtual machines and storage hosted by public cloud service providers such as AWS, GCP, and/or Azure Cloud. Non-limiting examples of such cloud based hardware systems include a Google Cloud storage bucket used to store the compiled software, a Google Cloud virtual machine with Intel Skylake CPU and NVIDIA Tesla 4 GPU used to host the service that embeds stored software onto a webpage, a Windows based laptop with an Intel i5 3500k CPU, 8GB of RAM, 2TB hard drive, wired Internet connection, a 15" screen, and a mouse, used to access the compiled software embedded on the service webpage. Another non-limiting example of a specific type of a suitable hardware platform is a standalone personal computer system such as an iMac 24" with 16GB of unified memory, 2TB storage, and a Magic Mouse. Yet another non-limiting example of a specific type of a suitable hardware platform is a mobile device such as an iPhone or an iPad.

In some embodiments, the hardware platform(s) used to implement at least a portion of the system 1000 may be completely or partially virtualized via software. As long as the core functional modules included in a hardware platform 900 in FIG. 9 are provided via such a virtualized hardware environment, the completely or partially virtualized platform may be used to implement the system 1000 and/or execute at least a portion of the instructions 1030. It is to be understood that the specifications herein can be modified for other presently known or future hardware platforms.

The image data 1022 may include one or more input images (e.g., frames of a video) captured by the image capture device(s) 1004. Within each of the input image(s), the subject S1 was projected by the image capture device(s) 1004 from the three-dimensional ("3D") real-world to a two-dimensional ("2D") image. The input images(s) may be characterized as having x and y axes. Positions within the input image will be referred to as planar coordinates or image space coordinates and points or pixels within the image may be referred to as having x and y coordinates along the x and y axes, respectively.

The input image(s) may be provided to one or more machine learning processes (e.g., the neural network(s) 1032), which infer locations of one or more landmarks 1040 (e.g., joints) within the input image(s). The machine learning process(es) identify the landmark(s) 1040 and assign each of the landmark(s) 1040 (1) normalized 2D image space coordinates $(X, Y)$, and (2) a depth value $(Z)$ relative to a reference point related to the character (which is virtual representation of the subject S1), such as the centroid of the bounding box of the character. Thus, each of the landmark(s) 1040 is associated with a position or location. The landmark(s) 1040 may optionally include a label identifying the landmark (e.g., a left knee joint, a right elbow, etc.). The locations may be expressed in image space coordinates (e.g., x and y coordinate values) and may each include a relative depth value (e.g., z coordinate value, which approximates the depth value). The depth value may be a distance between a 3D position of a portion (e.g., a joint) of the subject S1 represented by a landmark and the image capture device(s) 1004 along a "projection line" of the image capture device(s) 1004. Such projection lines are not necessarily parallel to the Z axis unless the focal length is infinitely long. But, a projection direction of the image capture device(s) 1004 is approximately along the Z axis. Therefore, a z coordinate value may be used as an estimate of the relative depth value. The landmark(s) 1040 may be expressed as a vector (referred to as an input landmark coordinate vector). The depth value is referred to as being a relative depth value because real-world dimensions of elements within the input image(s) may not be available and/or may not have been available to the machine learning process(es). Thus, the depth value of a particular one of the landmark(s) 1040 may have been determined relative to the reference point related to the character (e.g., such as the centroid of the bounding box of the character). The z coordinate value may be uncoupled from the x and y coordinate values, for example, because the z coordinate value may be relative to the reference point and the x and y coordinate values may be relative to an origin of the x and y axes of the screen or image space coordinates. The z coordinate value may also be uncoupled from the x and y coordinate values because the z coordinate value corresponds to an original landmark location in 3D space and the x and y coordinate values correspond to a projection of the original landmark location from the 3D space to a 2D screen space with respect to the image capture device(s) 1004. If the reference point is not aligned (or is not align-able) with the origin, the x and y coordinates may be uncoupled from the z coordinate. In this manner, the relative depth value of the particular landmark may differ from an actual real-world depth of the particular landmark. The coordinates determined by the machine learning process(es) will be referred to as hybrid 2D/3D components, or hybrid planar and depth components. The hybrid 2D/3D components may be used to generate a hybrid 2D/3D representation of the landmark(s) 1040.

Rotoscoping is an animation technique that animators use to trace a portion of a motion picture and/or video, frame by frame, to produce realistic action within an animation. Thus, rotoscoping is a technique that may be used to improve or edit a pose of a subject detected by machine learning based processes, such as pose estimation. For example, an operator or user may use the rotoscoping tool 1034 to edit the landmark(s) 1040. For example, the user may use the rotoscoping tool 1034 to edit the x, y, and/or z coordinates of one or more of the landmark(s) 1040. The rotoscoping tool 1034 may use the user interface 1014 to generate a graphical user interface ("GUI") 1050 including the landmark(s) 1040 and instruct the user interface 1014 (e.g., the display device 910 illustrated in FIG. 9) to display the GUI 1050. The user may use the user interface 1014 to adjust the positions of the landmark(s) 1040. The rotoscoping tool 1034 may output 3D location(s) 1042 for the landmark(s) 1040.

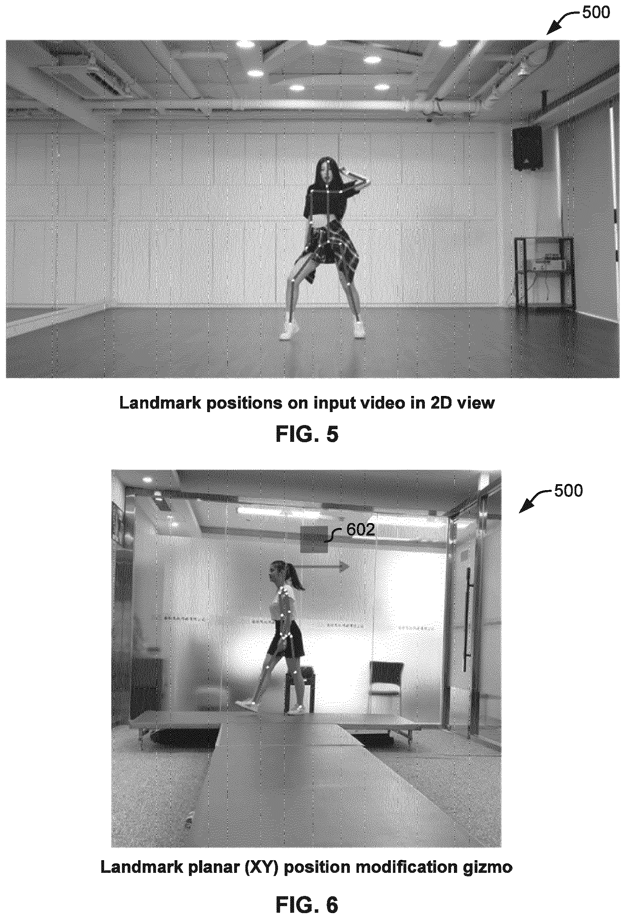

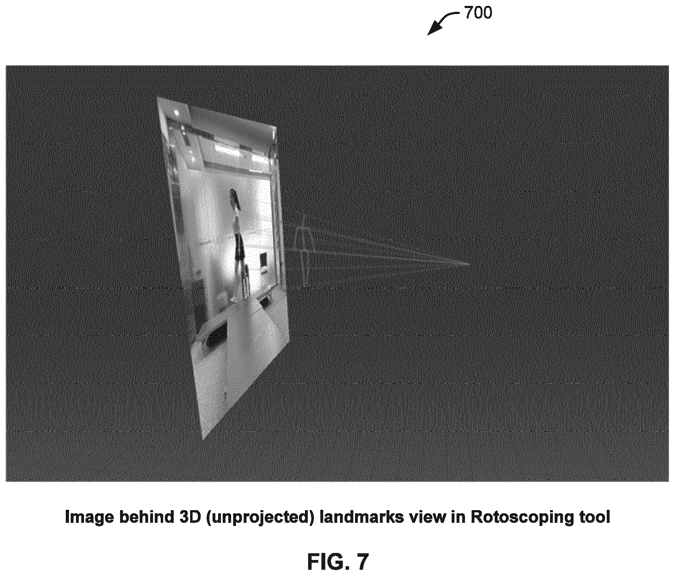

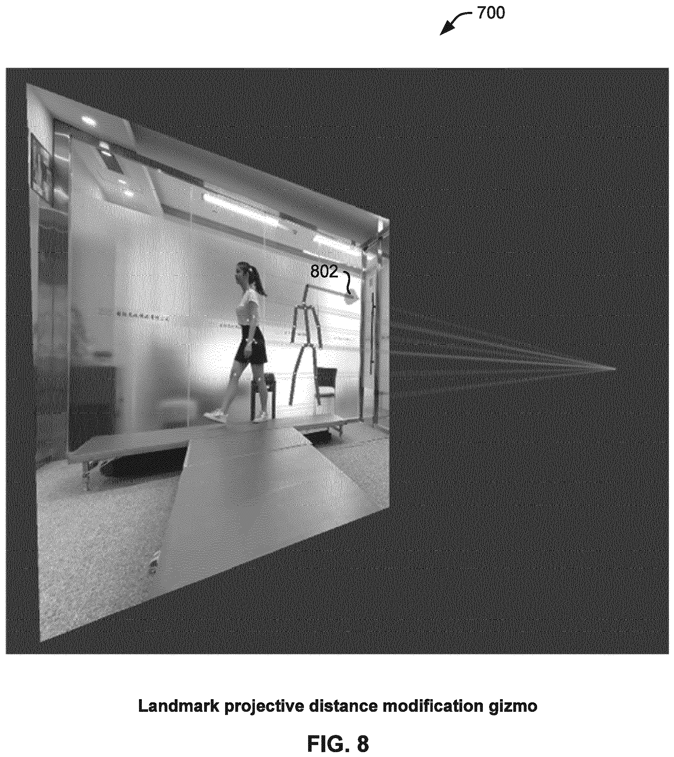

The rotoscoping tool 1034 may use the GUI 1050 to display a visualization to users that includes the inferred results (e.g., the landmark(s) 1040) in both a 2D view 500 (see FIGS. 5 and 6) and a 3D view 700 (see FIGS. 7 and 8) using 2D and 3D components, respectively, of the hybrid 2D/3D components (e.g., the landmark(s) 1040). The 2D view 500 (see FIGS. 5 and 6) may provide users with an easy and intuitive way to perform a "rotoscoping" style of pose editing of the planar components (e.g., the x and y coordinates). More specifically users may be able to adjust the planar / 2D components of the inferred results to match the input (reference) image(s) (e.g., obtained from one or more input videos). The 3D view 700 (see FIGS. 7 and 8) may provide users with an easy way to adjust the 3D/depth component (e.g., the z coordinate) change and the coupled small x and y coordinate changes of the inferred results along the camera projection lines (or projection directions) without the need to manually adjust the corresponding planar/2D components as a consequence of the adjusted 3D/depth component. The 3D location(s) 1042 (e.g., the refined animation results) may be expressed in the hybrid 2D/3D components and included in a training dataset to iteratively improve the accuracy of the machine learning process(ss) (e.g., the neural network(s) 1032, such as a perceptive neural network model for pose estimation). The 3D location(s) 1042 may be used (e.g., by the process(es) 1038) to generate an animation sequence and/or re-generate an improved animation sequence. The rotoscoping tool 1034 may provide means for operators to intuitively alter the landmark(s) 1040 in terms of planar image space coordinates and depth.

The depth component (estimated by the z coordinate value) and the planar components (x and y coordinate values) corresponding to a particular landmark (e.g., that corresponds to a joint position) are not independent. Therefore, when a user changes the depth component, the rotoscoping tool 1034 automatically adjusts or changes the planar components such that the planar components are consistent with the input image(s). Thus, the rotoscoping tool 1034 may allow a user to independently edit depth without also needing to manually edit the corresponding planar components. In contrast, conventional 3D editing tools require a user to modify the depth and the planar components together, which is very difficult to do manually. In other words, conventional 3D editing tools are unable to automatically adjust or change x and y coordinate values when a change has been made to the depth component. For example, a traditional key-frame animation editing method only allows users to directly modify the full 3D representation of the character's poses, which cannot be directly mapped to the reference images from which the animation poses are inferred by the neural network(s) 1032. Therefore, users cannot use traditional key-frame animation editing methods to perform accurate rotoscoping style animation editing to the inferred results (e.g., the landmark(s) 1040) by aligning the 2D planar components of the inferred results with the input image(s) in the background of the editor. The rotoscoping tool 1034 may avoid these limitations of traditional key-frame method by allowing poses to be edited via hybrid planar and depth components instead of or in addition to being edited using the full 3D representation (e.g., estimated 3D location(s) 1044).

The 3D location(s) 1042 may be provided to the unprojection functionality 1036, which estimates (real-world) 3D location(s) 1044 based at least in part on the (relative) 3D location(s) 1042 and optionally uses the estimated 3D location(s) 1044 to determine a pose of the subject S1. In other words, the unprojection functionality 1036 unprojects the 3D location(s) 1042 and attempts to determine their original 3D position (in the real-world) from their hybrid 2D/3D components. Thus, the unprojection functionality 1036 estimates an actual depth or z coordinate value for each of the 3D location(s) 1042. The estimated 3D location(s) 1044 output by the unprojection functionality 1036 will be described as belonging to a world space and may be expressed as a vector (referred to as an output landmark coordinate vector). If the rotoscoping tool 1034 is not used and/or is not present, the landmark(s) 1040 may be provided to the unprojection functionality 1036, which may estimate the estimated 3D location(s) 1044 based at least in part on the landmark(s) 1040 and optionally use the estimated 3D location(s) 1044 to determine a pose of the subject S1. The unprojection functionality 1036 may determine a set of hybrid 2D/3D components for the estimated (real-world) 3D location(s) 1044, for example, by reprojecting the estimated 3D location(s) 1044, if desired. Such reprojected 3D location(s) may be provided to the rotoscoping tool 1034, which may be used to modify their positions. By way of another non-limiting example, the reprojected 3D location(s) may be provided to the machine learning process(es) in a training dataset.

The hybrid 2D/3D components may be a source of certain challenges because these components are not independent of one another; they are coupled by the nature of perspective projection, which encodes some of the depth information into planar image coordinates. While it is relatively easy to go from a full 3D representation to this hybrid one during the training data preprocessing stage when the 3D labeling is available, recreating the full 3D representation of the true 3D poses from the inference results as expressed in the hybrid 2D/3D components becomes a challenge.

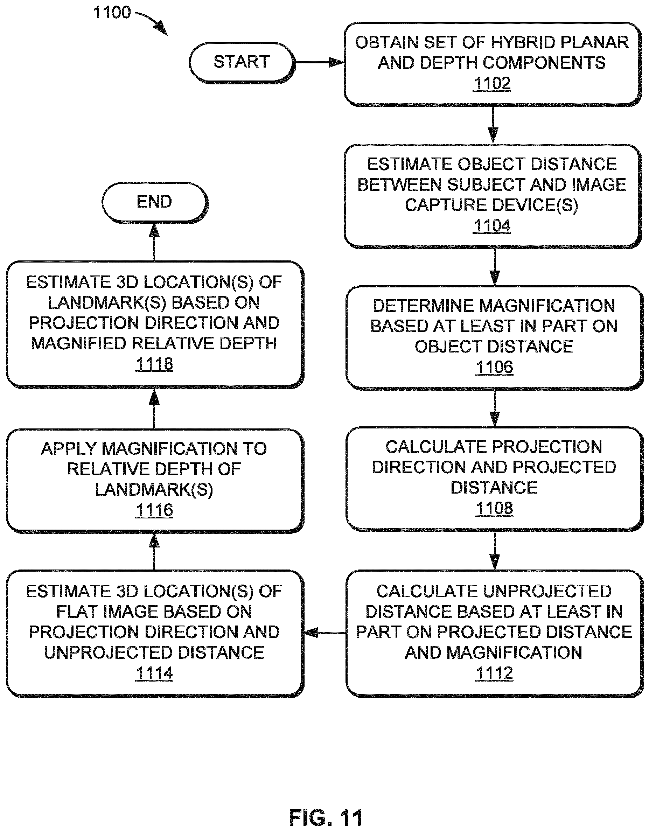

The unprojection functionality 1036 may implement methods (e.g., a method 1100 illustrated in FIG. 11) and algorithms that may unproject hybrid planar and relative depth representations of real-world joint positions (e.g., the landmark(s) 1040 output by the neural network(s) 1032 and/or the 3D location(s) 1042 output by the rotoscoping tool 1034) of a humanoid model (e.g., generated by connecting the landmark(s) 1040 and/or the 3D location(s) 1042) and reconstruct a full 3D representation of the pose, position and orientation of the humanoid model in the real world for animation or other motion capture purposes (e.g., performed by the process(es) 1038).

The unprojection functionality 1036 may output the estimated 3D location(s) 1044 to the process(es) 1038, which may use the estimated 3D location(s) 1044 to generate one or more different images and/or one or more new video segments. By way of non-limiting examples, the process(es) 1038 may generate an animation or perform portions of a motion capture pipeline.

The unprojection functionality 1036 may output the estimated 3D location(s) 1044 to the rotoscoping tool 1034, which may use the GUI 1050 to display the unprojected x and y coordinate values of the estimated 3D location(s) 1044 in the 2D view 500 (see FIGS. 5 and 6) and the unprojected depth component (e.g., estimated by the z coordinate value) in the 3D view 700 (see FIGS. 7 and 8). A user may use the 2D view 500 to edit the positions of the unprojected x and y coordinate values of the estimated 3D location(s) 1044 and/or the 3D view 700 to edit the depth expressed in the unprojected x, y, and z coordinate values of the estimated 3D location(s) 1044. Edited estimated 3D location(s) 1046 generated using the rotoscoping tool 1034 may be provided to the process(es) 1038.

The rotoscoping tool 1034 may provide users with a "rotoscoping" style of animation editing tool that may be used to improve animations produced at least in part using the perceptive deep neural model (e.g., the neural network(s) 1032) and augment a ground truth training dataset used to train such video based perceptive deep neural network models. Such ground truth training datasets generally consist of video labeled with 3D pose labels. The 3D location(s) 1042 and/or the edited estimated 3D location(s) 1046 output by the rotoscoping tool 1034 may be included in training data and used to train the machine learning process(es) (e.g., the neural network(s) 1032, such as video based perceptive deep neural network models). Doing so may help improve the results inferred by the machine learning process(es). The rotoscoping tool 1034 may be used to provide the 2D input image(s) labeled with the landmark(s) 1040, the 3D location(s) 1042, and/or the edited estimated 3D location(s) 1046 to be used as training data. Training perceptive neural models (e.g., the neural network(s) 1032) to estimate 3D human poses from 2D images often relies on a mixture of 2D (image-based) and 3D labels for one or more of the following reasons.

First, perceptive deep neural network ("DNN") models are designed to find features directly in the image space.

Second, resulting joint positions may be required to be mapped back to the original image.

Third, there may be limited access to good quality 3D labeled training data that includes 3D joint positions and corresponding images representing a sufficient variety of body shapes, appearance of the subject(s), poses of the subject, and one or more environments. 2D data may be required together with 3D data to train a 3D pose estimation model. 2D data is primarily created by manually labeling planar XY coordinates of a subject's joint positions in the image space. To be used with the 2D dataset, the 3D joint positions in the 3D dataset may be sliced into the planar XY component that matches the input images and the depth component (approximated by the z coordinate value) that reflects how far away the joint is from the camera.

Fourth, the depth component of the inference results obtained from the perceptive neural network model (e.g., the neural network(s) 1032) often capture only the depth of the joint positions relative to the subject's local coordinate frame because it is challenging to construct a perceptive neural network model to infer the global depth of the joint positions of the subject.

Fifth, it is very difficult for users to modify the full 3D representation expressed in cartesian coordinates (e.g., x, y, and z coordinates) of the character's joints directly to match the character's joints in the pixel space of reference images in a "rotoscoping" style of pose editing.

Sixth, the planar XY component is identical to the x and y coordinate values part of the full 3D representation expressed in cartesian coordinates (e.g., x, y, and z coordinates) of the character's joint positions when an orthogonal projection camera is used to project the 3D positions of the character joints to the planar image space. However, real world cameras create images via "perspective projection" instead of "orthogonal projection," which is a pragmatic design to capture a human measured in meters onto the camera's charge-coupled device ("CCD") measured in millimeters. Therefore, a perspective projection camera model may be adopted while preparing training data, rendering the animation results derived from the humanoid joint landmarks inferred from the input images by the DNN model and editing the animation results as well as re-labeling the landmarks.

What's more, limited access to good quality 3D labeled training data from RGB videos may result in 2D coordinates of joint positions as projected to the image plane being estimated with high accuracy, while depth of joint positions is estimated with much less accuracy.

As mentioned herein, the landmark(s) 1040 inferred by the neural network(s) 1032 may each include a combination of image space planar coordinates (referred to as "2D positions" or "XY coordinates") and a separate third dimension component, which may be thought of as the relative depth (estimated by a "Z coordinate") of portions (e.g., joints) of the subject S1 represented by the landmark(s) 1040. When present, the rotoscoping tool 1034 may be used to edit the location of one or more of the landmark(s) 1040. Then, the unprojection functionality 1036 may transform the hybrid 2D/3D components (of the landmark(s) 1040 and/or the 3D location(s) 1042) into the full 3D representation of the landmark (e.g., joint) positions as expressed in cartesian coordinates with the help of an assumed projective camera model (discussed below). In other words, the unprojection functionality 1036 may be used to unproject the hybrid 2D/3D components of the inference results (e.g., the landmark(s) 1040 and/or the 3D location(s) 1042) into the full 3D representation (e.g., the estimated 3D location(s) 1044) of the joint positions of the subject S1. The full 3D representation (e.g., the estimated 3D location(s) 1044) allows the input image(s) input into the neural network(s) 1032 to be used to create animations or motion captures.

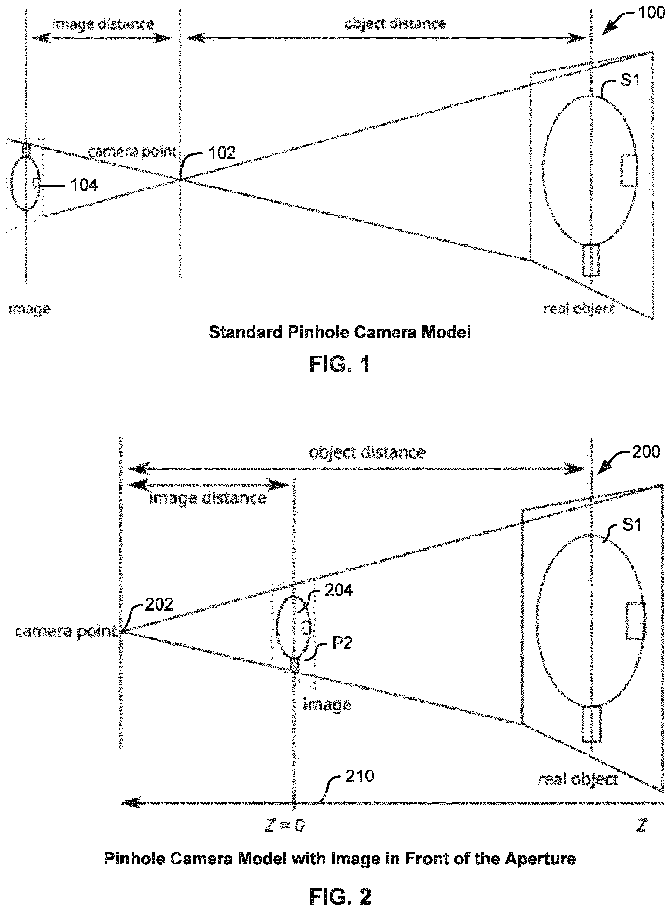

The unprojection functionality 1036 may unproject the hybrid 2D/3D components (of the landmark(s) 1040 and/or the 3D location(s) 1042) into the estimated 3D location(s) 1044 expressed in cartesian coordinates using a camera model to model the image capture device(s) 1004. FIG. 1 is a diagram illustrating components of a first pinhole camera model 100 that may be used to model the image capture device(s) 1004. Modeling the image capture device(s) 1004 is necessary to perform XY image space coordinates unprojection. In FIG. 1, the first pinhole camera model 100 is depicted capturing an image 104 of the subject S1. The pinhole camera model 100 assumes the image capture device(s) 1004 lacks a lens and includes a single-point-sized aperture 102. The image 104 captured by the first pinhole camera model 100 appears behind the aperture 102 and is inverted.

FIG. 2 is a diagram illustrating components of a second pinhole camera model 200 that may be used to model the image capture device(s) 1004. In the second pinhole camera model 200, an image 204 is formed in front of a single-point-sized aperture 202, which may not be physically correct but may not change the final result and has the advantage that the image 204 is not inverted. A camera frame has been selected so that its Z axis 210 points away from the subject S1 being photographed, an image plane P2 is placed at Z = 0 and an image center (not shown) is at X = 0, Y = 0. When the subject S1 is visualized (e.g., by the rotoscoping tool 1034) for the purpose of editing the pose of the subject S1, an artificial object distance (between the subject S1 and the aperture 202) may be selected that is shorter than the image distance (between the image 204 and the aperture 202) so that the subject S1 may be rendered in front of the image 204 for easier "rotoscoping" style pose editing.

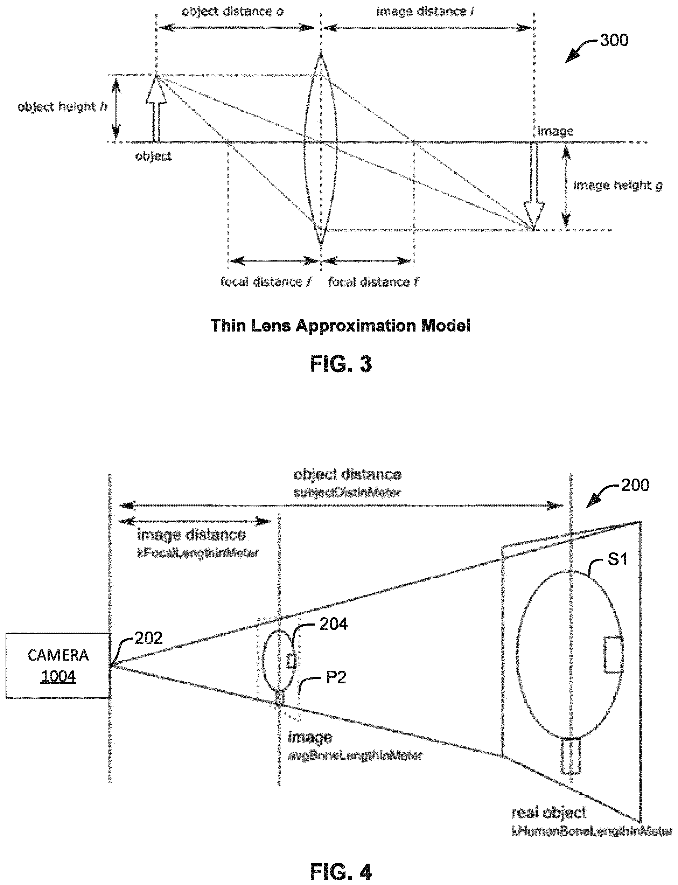

The assumptions that the image capture device(s) 1004 lacks a lens and has the single-point-sized aperture 202 implies that each world point in view may cast only a single ray of light into the aperture 202 and thus the image 204 formed is always in focus no matter the distance between the aperture 202 and the image plane P2. This may not be the case for real lensed cameras for which the focus depends on a number of factors whose relation is commonly represented using a thin lens approximation model 300 (see FIG. 3) along with Equation (Eq.) 1 below, referred to as a lens approximation formula:

$$\frac{1}{f} = \frac{1}{o} + \frac{1}{i} \qquad \text{Eq. 1}$$

In Eq.1 above, a variable f represents a focal distance (or focal length) of the image capture device(s) 1004, a variable o represents the object distance from the image capture device(s) 1004 (e.g., from the aperture 202), and a variable i represents the image distance from the image capture device(s) 1004 (e.g., from the aperture 202). A value of the variable i is not fixed and may not be easy to retrieve or obtain. However, in practical scenarios, the value of the variable i is very small compared to a value of the variable o. Therefore, as shown in Eq. 2 below, when modeling a lensed camera using the pinhole camera model 200, the image distance (represented by the variable i) may be approximately equal to the focal distance (represented by the variable f):

$$o \gg i \Rightarrow i \approx f \qquad \text{Eq. 2}$$

Thus, an aperture-to-image-plane distance (represented by the variable i) may be set equal to the focal distance of the camera being modeled.

Moreover, the thin lens approximation model 300 (see FIG. 3) may be used to obtain Eq. 3, referred to as a thin lens magnification formula. In Eq. 3, a variable M represents magnification, a variable g represents the image height, and a variable h represents the object height:

$$M = -\frac{g}{h} = \frac{i}{o} \qquad \text{Eq. 3}$$

As shown in Eq. 3 above, the magnification (represented by the variable M) is equal to a ratio of the image distance (represented by the variable i) to the object distance (represented by the variable o).

In embodiments in which details of the image capture device(s) 1004 used to capture a particular photograph are unknown, reasonable or default values may be used for intrinsic camera parameters, such as focal length *(kFocalLengthinMeter)* and/or camera sensor dimension *(kCGDSizeinMeter)*. The default values of the intrinsic camera parameters may be based at least in part on product and/or domain circumstances. In embodiments in which details of the image capture device(s) 1004 used to capture a particular photograph are known, actual values of the camera parameters (e.g., focal length, camera sensor dimension, and/or the like) may be used to obtain higher accuracy of unprojection of the landmark(s) 1040 inferred by the neural network(s) 1032 and used to obtain a full 3D representation (e.g., the estimated 3D location(s) 1044) of the subject S1 in world space. Further, in some embodiments, the default values of the intrinsic camera parameters may be customized or modified by an operator to match the actual camera intrinsic parameter values.

FIG. 11 is a flow diagram of the method 1100 that may be performed by the system 1000. In first block 1102, the unprojection functionality 1036 obtains a set of hybrid planar and depth components associated with the subject S1. For example, in block 1102, the unprojection functionality 1036 may obtain the landmark(s) 1040 and/or the 3D location(s) 1042. The set of hybrid planar and depth components may be stored in an input data structure, such as an array of input landmark coordinate vectors (e.g., represented by a variable *inputLandmarks*). For each of the landmark(s) 1040 and/or the 3D location(s) 1042, corresponding ones of the set of hybrid planar and depth components defining an input landmark coordinate vector (e.g., input x, y, and z coordinates) may be stored in the input data structure at $inputLandmark_i$. The unprojection functionality 1036 may store the estimated 3D location(s) 1044 in an output data structure, such as an array of output landmark coordinate vectors (e.g., represented by a variable *outputLandmark*). For each of the landmark(s) 1040 and/or the 3D location(s) 1042, an output landmark coordinate vector (e.g., output x, y, and z coordinates) may be stored in the output data structure at $outputLandmark_i$.

Then, in block 1104, the unprojection functionality 1036 determines an object distance (e.g., represented by a variable *subjectDistinMeter*) between the subject S1 and the image capture device(s) 1004. A dimension (e.g., a height, a length, and/or the like) of the subject S1 or a portion thereof may be used to determine the object distance.

For example, if the subject S1 is a human adult, a bone length value associated with the subject S1 may be used, such as an average bone length (e.g., represented by a variable avgBoneLength). A reasonable or average height (e.g., represented by a variable *kHumanHeightInMeter*) of a human adult may be multiplied by a multiplier (e.g., 0.2) to estimate an average real-world bone length (e.g., represented by a variable *kHumanBoneLengthInMeter*) of an average person (e.g., *kHumanBoneLengthInMeter = kHumanHeightInMeter* * 0.2). The multiplier (e.g., 0.2) may be based on statistics of average bone length to height ratio of humans. In embodiments in which the height of the subject S1 pictured is known, the bone length value may be calculated by multiplying that height by 0.2 to obtain the bone length value and achieve higher accuracy of unprojection of the landmark(s) 1040 inferred by the neural network(s) 1032 and/or the 3D location(s) 1042 obtained from the rotoscoping tool 1034. Further, in some embodiments, the bone length value may be customized or modified by an operator to match or correspond with the actual height of the real world subject S1. If the bone length value of the subject S1 is known, the unprojection functionality 1036 may obtain the bone length value from the memory 1012 and/or from the user via the user interface 1014.

The unprojection functionality 1036 may obtain the dimension (e.g., the bone length value) using the set of hybrid planar and depth components. For example, if the subject S1 is a human being, in block 1104, the unprojection functionality 1036 may obtain the bone length value for the subject S1 using the set of hybrid planar and depth components. The bone length value may be an average bone length (e.g., represented by a variable avgBoneLength) calculated based at least in part on the set of hybrid planar and depth components, which represent joints. The unprojection functionality 1036 may calculate a value of the variable avgBoneLength as a 3D distance computed from the set of hybrid planar and depth components (e.g., represented by the variable inputLandmarks). The set of hybrid planar and depth components may include x, y and z coordinates for each of the landmark(s) 1040 and/or the 3D location(s) 1042, but the values of the x, y and z coordinates may not be proper cartesian coordinates because the z coordinate may not be coupled with the x and y coordinates. In other words, the x and y coordinates may be in relation to a first reference point (e.g., an origin of the x and y axes) and the z coordinate may be in relation to a different second reference point (e.g., the centroid of the bounding box of the character). However, the x, y, and z coordinates may have the same scale so they may be considered to be close enough to proper cartesian coordinates to compute and approximate the bone length value, particularly if the origin of the x and y axes is centered within a space defined by the input image(s) (e.g., centered out).

If the set of hybrid planar and depth components (e.g., represented by the variable *inputLandmarks*) are all encoded in the normalized image space, the unprojection functionality 1036 may convert the bone length value (e.g., the value of the variable *avgBoneLength*) to a metric representation by multiplying the bone length value by a camera sensor metric size (e.g., represented by a variable *kCCDSizeInMeter*) (e.g., *avgBoneLengthInMeter = avgBoneLength * kCCDSizeInMeter*).

Then, in block 1104, the unprojection functionality 1036 (see FIG. 10) may use the dimension (e.g., the value of the variable *avgBoneLengthInMeter*) to determine an object distance (e.g., represented by the variable *subjectDistInMeter*) between the subject S1 (e.g., labeled "real object" in FIG. 4) and the aperture of the image capture device(s) 1004 in the real world along the z-axis. FIG. 4 depicts the second pinhole camera model 200 labeled with variable names to help aid in understanding the method 1100. As shown in FIG. 4, the unprojection functionality 1036 (see FIG. 10) may approximate the object distance that the subject S1 was from the image capture device(s) 1004 by utilizing the pinhole camera model 200, an assumed camera focal length (e.g., stored by the variable *kFocalLengthInMeter*), the average real-world bone length of an average person (e.g., stored by the variable *kHumanBoneLengthInMeter*), and the bone length value (e.g., *subjectDistLnMeter = kHumanBoneLengthInMeter / avgBoneLengthInMeter * kFocalLengthInMeter*);

Then, in block 1106, the unprojection functionality 1036 (see FIG. 10) calculates magnification (e.g., represented by a variable *magnificationScaler*). For example, the unprojection functionality 1036 may use the object distance (e.g., represented by a variable *subjectDistInMeter*) obtained in block 1104 to calculate the magnification (e.g., *magnificationScaler = subjectDistInMeter / kFocalLengthInMeter*). By way of a non-limiting example, the inverted magnification formula (Eq. 3) may be used to obtain Eq. 4 below:

$$M^{-1} = -\frac{h}{g} = \frac{o}{i} \rightarrow \frac{object\ distance}{image\ distance} \rightarrow \frac{subjectDistInMeter}{kFocalLengthInMeter} \quad \text{Eq. 4}$$

In block 1108, the unprojection functionality 1036 (see FIG. 10) determines (for each *inputLandmark$_i$* in *inputLandmark*) a projection direction and a projected distance. In block 1108, the unprojection functionality 1036 may optionally center out the normalized image space x and y coordinates, for example using Eq. 5 below:

$$inputLandmark_i.xy = inputLandmark_i.xy \quad \text{Eq. 5}$$
$$- [0.5, 0.5]$$

The unprojection functionality 1036 may convert the coordinates from normalized image space coordinates to metric representation utilizing the assumed camera sensor metric size, for example, using Eq. 6 below:

$$inputLandmark_i = inputLandmark_i \quad \text{Eq. 6}$$
$$* kCCDSizeInMeter$$

Referring to FIG. 2, because the coordinate system places the image 204 (e.g., the CCD plane) at z = 0, and the aperture 202 (also referred to as a camera point) at [0, *0, kFocalLengthinMeter*] and looking at -z (or facing in the -z direction) (see FIG. 2), the unprojection functionality 1036 (see FIG. 10) may calculate the projection direction (e.g., represented by a variable *projectionDirection*) as a direction from the x and y coordinates stored in the variable *inputLandmark$_i$* with zero being used as the z-coordinate to the aperture 202, for example, using Eq. 7 below:

$$projectionDirection = \qquad\qquad\qquad \text{Eq. 7}$$
$$normalize([inputLandmark_i.xy, \ 0] \ -$$
$$[0, \ 0, \ kFocalLengthInMeter]$$

The unprojection functionality 1036 may calculate the projected distance (e.g., represented by the variable *projectedPointDistance*) from the x and y coordinates stored in the variable *inputLandmark$_i$* with zero being used as the z-coordinate to the aperture 202, for example, using Eq. 8 below:

$$projectedPointDistance = \qquad\qquad\qquad \text{Eq. 8}$$
$$magnitude([inputLandmark_i.xy, \ 0] \ -$$
$$[0, \ 0, \ kFocalLengthInMeter]$$

Then, in block 1112, the unprojection functionality 1036 (see FIG. 10) determines (for each *inputLandmark$_i$* in *inputLandmark*) an unprojected distance (e.g., represented by the variable *unprojectedPointDistance*) from a corresponding one of the landmark(s) 1040 (or the 3D location(s) 1042) to the aperture 202 or the camera point, for example, using Eq. 9 below:

$$unprojectedPointDistance = \qquad\qquad\qquad \text{Eq. 9}$$
$$projectedPointDistance \ * \ magnificationScaler$$

Eq. 9 may assume that the subject S1 was flat. The term "flat" means the subject S1 was projected to a vertical plane (positioned at the object distance from the aperture 202) perpendicular to the Z axis.

Next, in block 1114, the unprojection functionality 1036 (see FIG. 10) estimates (for each *inputLandmark$_i$* in *inputLandmark*) an unprojected output landmark coordinate vector (e.g., represented by the variable *outputLandmark$_i$*), for example, using Eq. 10 below:

$$outputLandmark_i = \qquad\qquad\qquad \text{Eq. 10}$$
$$[0, \ 0, \ kFocalLengthInMeter] \ +$$
$$projectionDirection \ *$$
$$unprojectedPointDistance).$$

The estimate produced in block 1114 treats the subject S1 as though the subject S1 was flat and ignores the z coordinates determined by the machine learning process(es) (e.g., the neural network(s) 1032).

Then, in block 1116, the unprojection functionality 1036 (see FIG. 10) applies the magnification to the relative depth of each *inputLandmark$_i$* in *inputLandmark* to obtain a magnified landmark relative depth (e.g., represented by the variable depthdelta), for example, using Eq. 11 below:

$$depthDelta = inputLandmark_i.z \ * \qquad\qquad\qquad \text{Eq. 11}$$
$$magnificationScaler \ / \ subjectDistInMeter \ *$$
$$unprojectedPointDistance$$

Next, in block 1118, the unprojection functionality 1036 unprojects the relative depth of each outputLandmark$_i$ in outputLandmark, for example, using Eq. 12 below:

$$outputLandmark_i = outputLandmark_i - \qquad \text{Eq. 12}$$
$$(projectionDirection * depthDelta).$$

Thus, in block 1118, the unprojection functionality 1036 (see FIG. 10) estimates the estimated 3D location(s) 1044 (see FIG. 10), which are stored in the variable outputLandmark. After block 1118, the method 1100 may terminate.

Referring to FIG. 10, the estimated 3D location(s) 1044 (stored in the variable outputLandmark) may be reprojected from world space back to the image space (e.g., the set of hybrid planar and depth components), which are stored in the variable inputLandmarks. For example, the unprojection functionality 1036 may store the estimated 3D location(s) 1044 in the variable inputLandmarks. Then, the unprojection functionality 1036 may invert operations described with respect to the method 1100 to reproject world space input landmark coordinate vectors (e.g., represented by the variable inputLandmarks) representing the unprojected subject S1, to output landmark coordinate vectors representing the subject image (e.g., represented by a variable outputLandmarks).

As shown in FIG. 5, the rotoscoping tool 1034 may render 2D joint positions (e.g., the x and y coordinates of the landmark(s) 1040 and/or the 3D location(s) 1042) in planar image coordinates overlaid on top of the input image(s) (e.g., video frames). Users (e.g., animators or manual labelers) may correct such projected 2D joint positions in planar coordinates so that the corresponding joint landmarks overlap with the subject's joints in the image space precisely by dragging a 2D Gizmo 602 as shown in FIG. 6. However, it is difficult for manual labelers to correct depth coordinates because a depth coordinate is coupled with planar coordinates.

The goal of 3D pose estimation is to find at least one of the infinite solutions that looks natural and continuous and interprets the 2D projected result of the 3D pose as embodied in the input images.

In the rotoscoping tool 1034, the difficulty of correcting the depth coordinates is resolved by independent views in which the user can modify the landmark position. FIG. 6 depicts a 2D/planar view that displays an orthogonal view of the image with XY image space coordinates overlaid on top of the real object depicted in the input image(s) (video frame) which allows the user to perform only planar XY editing of landmark positions. FIG. 8 depicts a 3D/depth view that displays unprojected landmarks (e.g., obtained by the method 1100) in a 3D view and allows the users to modify any given landmark position only along a "projection line" (e.g., along the projection direction of the image capture device(s) 1004), which extends from the camera point (or aperture) to the projected landmark and through the unprojected landmark. The unprojected landmarks are positioned in a way that for each landmark, a ray from the projection camera position goes through the unprojected landmark position and the corresponding landmark position on the image. This way, the rotoscoping tool 1034 allows users to manually adjust only the single depth coordinate along the projection axis of the image capture device(s) 1004 that passes through the joint of the subject S1 to correspond with the input image without changing the matching 2D planar coordinates so that the combined 3D coordinates are consistent with the 2D projected poses as embodied in the input image(s) (e.g., video frames).

Common "depth" inference errors made by neural network models for pose estimation, like "z-flipped" positions, are intuitive to correct by dragging a depth marker 802 of the joint towards the opposite side of the subject's root joint.

A traditional keyframe based 3D pose editor allows the user to modify the 'z' component of the 3D cartesian coordinates independently from the x and y components of the 3D cartesian coordinates. However, as a result of modifying the cartesian z component, the planar XY of the joint as projected to the image plane may no longer overlap with the subject's corresponding joint in the reference image. Since the cartesian x and y components of the joint position is very different from the planar XY component of the joint position as projected to the image plane it may be extremely difficult for operators to edit the cartesian coordinates of the unprojected joint positions without violating the constraint that the planar XY components of the projected landmarks should overlap with the corresponding joints in the reference image.

Rigid bone length and bone symmetry assumptions may be used to confine user's coordinate adjustments to further reduce the dimensionality of the manual adjustments.

In addition to modeling a human being (e.g., by creating an articulated humanoid model), the system 1000 may be used to generate a model of any articulated multi-body structure or single 3D object. Although, the method 1100 (see FIG. 11) and the rotoscoping tool 1034 were described and illustrated as being used with landmark(s) 1040 obtained from an articulated humanoid model, the system 1000 is not limited to use with such an articulated humanoid model. As a concrete example, the subject S1 may be other than an articulated humanoid model and the hybrid planar and depth components inferred by the neural network(s) 1032 from 2D input image(s) (e.g., videos) may be refined or edited via the rotoscoping tool 1034. The articulated humanoid skeletal model may be an articulated multiple body model with up to three degrees of freedom (DOF) per joint except the root joint which may have six DOF. It's straightforward to generalize such an articulated humanoid model to any articulated multiple body model with arbitrary DOFs at the joints. The rotoscoping tool 1034 may be used to refine and edit the 3D poses of any articulated multiple body model based on 3D poses inferred (e.g., by the neural network(s) 1032) from 2D input image(s) (e.g., videos) depicting the articulated multiple body model.

The articulated humanoid skeletal model may also be generalized to a single 3D object with six DOF. In such generalizations, the "joints" (e.g., represented by the landmark(s) 1040) may be generalized to definitive vertices of the 3D object. The definitive vertices of a 3D object are a set of vertices that may uniquely define a 3D pose (position and orientation), shape, and dimension of a 3D model of the 3D object. For example, in the case of a 3D object in the shape of a 3D cube, an example of the definitive vertices are the 4 corners of the cube. With such generalization, the rotoscoping tool 1034 may be used to refine and edit the 3D pose(s) and/or shape(s) of the 3D object inferred (e.g., by the neural network(s) 1032) from 2D input image(s) (e.g., videos) depicting the 3D object.

The system 1000 may be used to reconstruct the full 3D representation of the pose, position, and orientation of the subject S1 for animation and motion capture purposes from the hybrid planar XY and depth associated with the landmark(s) 1040 inferred by the machine learning process(es) (e.g., perceptive deep neural network model(s)). The system 1000 may enable operators and/or users to edit the 3D poses (e.g., of humans) inferred by the machine learning process(es) (e.g., perceptive deep neural network model(s)) from 2D input image(s) by independently editing the planar XY components and the depth component (estimated by the z coordinate value) of the landmarks (e.g., the landmark(s) 1040, the 3D location(s) 1042, and/or the estimated 3D location(s) 1044) in a "rotoscoping" style (e.g., the rotoscoping 1034). The editing results (e.g., the 3D location(s) 1042) may be integrated into a training dataset and used to train the machine learning process(es) (e.g., perceptive deep neural network model(s), which may be referred to as a 3D pose estimation DNN) with higher accuracy and generality. The editing results may be used to improve the quality of the AI generated 3D animations from the 2D input image(s) and/or videos.

At least one embodiment of the disclosure can be described in view of the following 25 clauses:

1. A method comprising: obtaining at least one first landmark associated with a subject and inferred by at least one machine learning process from at least one input image depicting the subject, and captured by at least one image capture device, each of the at least one first landmark comprising a first x coordinate, a first y coordinate, and a first z coordinate, the first z coordinate being uncoupled from the first x coordinate and the first y coordinate; and calculating one or more second landmarks by: determining, for each of the at least one first landmark, a projection direction and a projected distance from the at least one image capture device to a location at the first x coordinate and the first y coordinate, and estimating, for each of the at least one first landmark, a set of coordinates for a corresponding at least one second landmark of the one or more second landmarks based at least in part on the first z coordinate, the projection direction, and the projected distance, the set of coordinates comprising a second x coordinate, a second y coordinate, and a second z coordinate coupled with one another.

2. The method of clause 1, wherein the at least one machine learning process comprises one or more perceptive deep neural networks.

3. The method of clause 1 or 2, further comprising: determining a dimension value based at least in part on a portion of the at least one first landmark; determining a subject distance along a z-axis extending between an origin of the z-axis and the at least one image capture device, the subject distance being determined based at least in part on the dimension value and a focal length value associated with the at least one image capture device; and calculating a magnification based at least in part on the subject distance, and the focal length value, wherein, for each of the at least one first landmark, the set of coordinates of the corresponding at least one second landmark is estimated based at least in part on the magnification.

4. The method of clause 3, wherein the dimension value is an estimate of bone length of the subject depicted in the at least one image.

5. The method of clause 3 or 4, wherein, for each of the at least one first landmark, the set of coordinates of the corresponding at least one second landmark is estimated based at least in part on a relative value calculated based at least in part on the first z coordinate, the projection direction, the projected distance, the magnification, and the focal length value.

6. The method of any one of clauses 1-5, wherein each of the at least one first landmark corresponds to an estimated location of a joint or a definitive vertex.

7. The method of any one of clauses 1-6, further comprising: displaying an editing tool to receive modifications to one or more edited landmarks comprising one or more of the at least one first landmark, or at least one of the one or more second landmarks; and providing the one or more edited landmarks to the at least one machine learning process in a training dataset.

8. The method of any one of clauses 1-7, further comprising: displaying an editable display to receive a modification to a particular landmark comprising one of the at least one first landmark, or one of the one or more second landmarks, the editable display permitting movement of the particular landmark only along at least one of an x-axis or a y-axis.

9. The method of any one of clauses 1-8, further comprising: displaying an editable display to receive a modification to a particular landmark comprising a first selected landmark of the at least one first landmark, or a second selected landmark of the one or more second landmarks calculated for the first selected landmark, the editable display permitting movement of the particular landmark only along the projection direction determined for the first selected landmark.

10. A system comprising: at least one processor; memory storing instructions that, if performed by the at least one processor, cause the system to: obtain an input set of coordinates determined based at least in part on at least one image captured by at least one image capture device, the input set of coordinates comprising first, second, and third coordinates, the third coordinate being uncoupled from the first and second coordinates; estimate an intermediate set of coordinates based at least in part on the first and second coordinates but not on the third coordinate; and estimate an output set of coordinates based at least in part on the third coordinate.

11. The system of clause 10, wherein the third coordinate corresponds to depth.

12. The system of clause 10 or 11, wherein the input set of coordinates were generated by one or more perceptive deep neural network.

13. The system of any one of clauses 10-12, wherein estimating the intermediate set of coordinates comprises: determining a subject distance along a z-axis extending between the input set of coordinates and the at least one image capture device; calculating a magnification based at least in part on the subject distance and a focal length value associated with the at least one image capture device; and determining a projection direction and a projected distance from the at least one image capture device to a location at the first and second coordinates, wherein the intermediate set of coordinates is calculated based at least in part on the first coordinate, the second coordinate, the subject distance, the projection direction, the projected distance, the magnification, and the focal length value.

14. The system of clause 13, wherein determining the subject distance comprises: determining a dimension value based at least in part on the input set of coordinates, wherein the subject distance is determined based at least in part on the dimension value and the focal length value.

15. The system of clause 14, wherein the dimension value is an estimate of bone length of a subject depicted in the at least one image.

16. The system of any one of clauses 10-15, wherein estimating the output set of coordinates comprises: calculating a magnification; determining a projection direction and a projected distance from the at least one image capture device to a location at the first and second coordinates; and subtracting a relative value from the intermediate set of coordinates, the relative value being calculated based at least in part on the third coordinate, the projection direction, the projected distance, the magnification, and a focal length value associated with the at least one image capture device.

17. The system of any one of clauses 10-16, wherein the instructions, if performed by the at least one processor, cause the system to: display an editing tool to receive modifications to an edited set of coordinates comprising at least one of the input set of coordinates or the output set of coordinates.

18. The system of clause 17, wherein the edited set of coordinates comprise x, y, and z coordinates, and the instructions, if performed by the at least one processor, cause the system to: determine a projection direction from the at least one image capture device to a location at the first and second coordinates; and generate a graphical user interface ("GUI") using the editing tool, the GUI being operable to generate a 2D view to receive a modification to a first position of only at least one of the x coordinate or the y coordinate, and the GUI being operable to generate a 3D view to receive a modification to a second position of the edited set of coordinates only along the projection direction.

19. The system of clause 17 or 18, wherein the input set of coordinates were generated by one or more machine learning processes, and the instructions, if performed by the at least one processor, cause the system to: provide the edited set of coordinates to the one or more machine learning processes in a training dataset.

20. The system of any one of clauses 10-19, wherein the input set of coordinates estimates a location of a joint or a definitive vertex.

21. The system of any one of clauses 10-20, wherein the instructions, if performed by the at least one processor, cause the system to: generate at least one new image based at least in part on the output set of coordinates.

22. The system of any one of clauses 10-21, further comprising: the at least one image capture device, which comprises a video camera that captures the at least one image, the instructions, if performed by the at least one processor, causing the system to: perform one or more machine learning processes that infer the input set of coordinates from the at least one image.

23. A system comprising: at least one processor; memory storing instructions that, if performed by the at least one processor, cause the system to: determine a projection direction for a landmark comprising first, second, and third coordinates; and display a graphical user interface ("GUI") operable to generate first and second editable displays, the first editable display to receive modifications to only the first and second coordinates, and the second editable display to receive modifications to the landmark only along the projection direction.

24. The system of clause 23, wherein the landmark was generated by one or more machine learning processes, and the instructions, if performed by the at least one processor, cause the system to: provide the landmark to the one or more machine learning processes in a training dataset.

25. The system of clause 23 or 24, wherein the instructions, if performed by the at least one processor, cause the system to: provide the landmark to one or more processes to be used to generate one or more images.

The foregoing described embodiments depict different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

While particular embodiments of the present invention have been shown and described, it will be obvious to those skilled in the art that, based upon the teachings herein, changes and modifications may be made without departing from this invention and its broader aspects and, therefore, the appended claims are to encompass within their scope all such changes and modifications as are within the true spirit and scope of this invention. Furthermore, it is to be understood that the invention is solely defined by the appended claims. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at *least* the recited number (e.g., the bare recitation of "two recitations," without other modifiers, typically means *at least* two recitations, or *two or more* recitations).

As used herein, a term joining items in a series (e.g., the term "or," the term "and," or the like) does not apply to the entire series of items, unless specifically stated otherwise or otherwise clearly contradicted by context. For example, the phrase "a plurality of A, B, and C" (with or without the Oxford comma) refers to a subset including at least two of the recited items in the series. Thus, the phrase refers to (1) at least one A and at least one B but not C, (2) at least one A and at least one C but not B, (3) at least one B and at least one C but not A, and (4) at least one A and at least one B and at least one C. Similarly, the phrase "a plurality of A, B, or C" (with or without the Oxford comma) refers to a subset including at least two of the recited items in the series. Thus, this phrase also refers to (1) at least one A and at least one B but not C, (2) at least one A and at least one C but not B, (3) at least one B and at least one C but not A, and (4) at least one A and at least one B and at least one C.

By away of another example, Conjunctive language, such as phrases of the form "at least one of A, B, and C," or "at least one of A, B and C," (i.e., the same phrase with or without the Oxford comma) unless specifically stated otherwise or otherwise clearly contradicted by context, is otherwise understood with the context as used in general to present that an item, term, etc., may be either A or B or C, any nonempty subset of the set of A and B and C, or any set not contradicted by context or otherwise excluded that contains at least one A, at least one B, or at least one C. For instance, in the illustrative example of a set having three members, the conjunctive phrases "at least one of A, B, and C" and "at least one of A, B and C" refer to any of the following sets: {A}, {B}, {C}, {A, B}, {A, C}, {B, C}, {A, B, C}, and, if not contradicted explicitly or by context, any set having {A}, {B}, and/or {C} as a subset (e.g., sets with multiple "A"). Thus, such conjunctive language is not generally intended to imply that certain embodiments require at least one of A, at least one of B, and at least one of C each to be present. Similarly, phrases such as "at least one of A, B, or C" and "at least one of A, B or C" refer to the same as "at least one of A, B, and C" and "at least one of A, B and C" refer to any of the following sets: {A}, {B}, {C}, {A, B}, {A, C}, {B, C}, {A, B, C}, unless differing meaning is explicitly stated or clear from context.

Accordingly, the invention is not limited except as by the appended claims.

**Claims**

**1.** A method comprising:

obtaining at least one first landmark associated with a subject and inferred by at least one machine learning process from at least one input image depicting the subject, and captured by at least one image capture device, each of the at least one first landmark comprising a first x coordinate, a first y coordinate, and a first z coordinate, the first z coordinate being uncoupled from the first x coordinate and the first y coordinate; and calculating one or more second landmarks by:

determining, for each of the at least one first landmark, a projection direction and a projected distance from the at least one image capture device to a location at the first x coordinate and the first y coordinate, and estimating, for each of the at least one first landmark, a set of coordinates for a corresponding at least one second landmark of the one or more second landmarks based at least in part on the first z coordinate, the projection direction, and the projected distance, the set of coordinates comprising a second x coordinate, a second y coordinate, and a second z coordinate coupled with one another.

2. The method of claim 1, wherein the at least one machine learning process comprises one or more perceptive deep neural networks.

3. The method of claim 1 or 2, further comprising:

determining a dimension value based at least in part on a portion of the at least one first landmark; determining a subject distance along a z-axis extending between an origin of the z-axis and the at least one image capture device, the subject distance being determined based at least in part on the dimension value and a focal length value associated with the at least one image capture device; and calculating a magnification based at least in part on the subject distance, and the focal length value, wherein, for each of the at least one first landmark, the set of coordinates of the corresponding at least one second landmark is estimated based at least in part on the magnification.

4. The method of claim 3, wherein the dimension value is an estimate of bone length of the subject depicted in the at least one image.

5. The method of claim 3, wherein, for each of the at least one first landmark, the set of coordinates of the corresponding at least one second landmark is estimated based at least in part on a relative value calculated based at least in part on the first z coordinate, the projection direction, the projected distance, the magnification, and the focal length value.

6. The method of any preceding claim, wherein each of the at least one first landmark corresponds to an estimated location of a joint or a definitive vertex.

7. The method of any preceding claim, further comprising:

displaying an editing tool to receive modifications to one or more edited landmarks comprising one or more of the at least one first landmark, or at least one of the one or more second landmarks; and providing the one or more edited landmarks to the at least one machine learning process in a training dataset.

8. The method of any preceding claim, further comprising:
displaying an editable display to receive a modification to a particular landmark comprising one of the at least one first landmark, or one of the one or more second landmarks, the editable display permitting movement of the particular landmark only along at least one of an x-axis or a y-axis.

9. The method of any one of claims 1 to 7, further comprising:
displaying an editable display to receive a modification to a particular landmark comprising a first selected landmark of the at least one first landmark, or a second selected landmark of the one or more second landmarks calculated for the first selected landmark, the editable display permitting movement of the particular landmark only along the projection direction determined for the first selected landmark.

10. A system comprising:

at least one processor;
memory storing instructions that, if performed by the at least one processor, cause the system to:

obtain an input set of coordinates determined based at least in part on at least one image captured by at least one image capture device, the input set of coordinates comprising first, second, and third coordinates, the third coordinate being uncoupled from the first and second coordinates;
estimate an intermediate set of coordinates based at least in part on the first and second coordinates but not on the third coordinate; and
estimate an output set of coordinates based at least in part on the third coordinate.

11. The system of claim 10, wherein the third coordinate corresponds to depth, or wherein the input set of coordinates were generated by one or more perceptive deep neural network.

12. The system of claim 10 or 11, wherein estimating the intermediate set of coordinates comprises:

determining a subject distance along a z-axis extending between the input set of coordinates and the at least one image capture device;
calculating a magnification based at least in part on the subject distance and a focal length value associated with the at least one image capture device; and
determining a projection direction and a projected distance from the at least one image capture device to a location at the first and second coordinates, wherein the intermediate set of coordinates is calculated based at least in part on the first coordinate, the second coordinate, the subject distance, the projection direction, the projected distance, the magnification, and the focal length value,
and preferably wherein determining the subject distance comprises:

determining a dimension value based at least in part on the input set of coordinates, wherein the subject distance is determined based at least in part on the dimension value and the focal length value,
and more preferably wherein the dimension value is an estimate of bone length of a subject depicted in the at least one image.

13. The system of any one of claims 10 to 12, wherein estimating the output set of coordinates comprises:

calculating a magnification;
determining a projection direction and a projected distance from the at least one image capture device to a location at the first and second coordinates; and
subtracting a relative value from the intermediate set of coordinates, the relative value being calculated based at least in part on the third coordinate, the projection direction, the projected distance, the magnification, and a focal length value associated with the at least one image capture device.

14. A system comprising:

at least one processor;
memory storing instructions that, if performed by the at least one processor, cause the system to:

determine a projection direction for a landmark comprising first, second, and third coordinates; and
display a graphical user interface ("GUI") operable to generate first and second editable displays, the first editable display to receive modifications to only the first and second coordinates, and the second editable display to receive modifications to the landmark only along the projection direction.

15. The system of claim 14, wherein the landmark was generated by one or more machine learning processes, and the instructions, if performed by the at least one processor, cause the system to:

provide the landmark to the one or more machine learning processes in a training dataset,
or wherein the instructions, if performed by the at least one processor, cause the system to:
provide the landmark to one or more processes to be used to generate one or more images.

Standard Pinhole Camera Model

FIG. 1

Pinhole Camera Model with Image in Front of the Aperture

FIG. 2

object distance *o*

image distance *i*

300

object height *h*

object

image

image height *g*

focal distance *f*    focal distance *f*

**Thin Lens Approximation Model**

## FIG. 3

object distance
subjectDistInMeter

200

image distance
kFocalLengthInMeter

S1

CAMERA
1004

202

204

P2

image
avgBoneLengthInMeter

real object
kHumanBoneLengthInMeter

## FIG. 4

Landmark positions on input video in 2D view

## FIG. 5

Landmark planar (XY) position modification gizmo

## FIG. 6

700

Image behind 3D (unprojected) landmarks view in Rotoscoping tool

FIG. 7

EP 4 339 892 A1

700

**Landmark projective distance modification gizmo**

**FIG. 8**

20

**FIG. 9**

**FIG. 10**

1100

START → OBTAIN SET OF HYBRID PLANAR AND DEPTH COMPONENTS 1102

↓

ESTIMATE OBJECT DISTANCE BETWEEN SUBJECT AND IMAGE CAPTURE DEVICE(S) 1104

↓

DETERMINE MAGNIFICATION BASED AT LEAST IN PART ON OBJECT DISTANCE 1106

↓

CALCULATE PROJECTION DIRECTION AND PROJECTED DISTANCE 1108

↓

CALCULATE UNPROJECTED DISTANCE BASED AT LEAST IN PART ON PROJECTED DISTANCE AND MAGNIFICATION 1112

←

ESTIMATE 3D LOCATION(S) OF FLAT IMAGE BASED ON PROJECTION DIRECTION AND UNPROJECTED DISTANCE 1114

↑

APPLY MAGNIFICATION TO RELATIVE DEPTH OF LANDMARK(S) 1116

↑

ESTIMATE 3D LOCATION(S) OF LANDMARK(S) BASED ON PROJECTION DIRECTION AND MAGNIFIED RELATIVE DEPTH 1118

↑

END

**FIG. 11**

Europäisches
Patentamt

European
Patent Office

Office européen
des brevets

# EUROPEAN SEARCH REPORT

Application Number

EP 23 19 7881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/248772 A1 (IQBAL UMAR [US] ET AL) 12 August 2021 (2021-08-12) | 1-6, 10-13 | INV. G06T7/73 |
| Y | * claims 5-7; figures 2,3A * | 7-9 | |
| A | * paragraph [0021] * * paragraphs [0024] – [0025] * * paragraphs [0027] – [0028] * * paragraphs [0031] – [0034] * * paragraph [0042] * * paragraph [0069] * * paragraph [0054] * ----- | 14,15 | |
| X | Anonymous: "Excerpts from the Blender 3.0 manual – Contextual Views, Axis Locking, Plane Locking", , 28 January 2022 (2022-01-28), XP093100961, Retrieved from the Internet: URL:https://docs.blender.org/manual/en/3.0/index.html [retrieved on 2023-11-13] | 14 | |
| Y | * the whole document * ----- | 8,9,15 | TECHNICAL FIELDS SEARCHED (IPC) |
| Y | LIU BUYU ET AL: "Active Learning for Human Pose Estimation", 2017 IEEE INTERNATIONAL CONFERENCE ON COMPUTER VISION (ICCV), IEEE, 22 October 2017 (2017-10-22), pages 4373-4382, XP033283311, DOI: 10.1109/ICCV.2017.468 [retrieved on 2017-12-22] * abstract; figure 1 * * section 3 * ----- -/-- | 7,15 | G06T |

The present search report has been drawn up for all claims

| Place of search | Date of completion of the search | Examiner |
|---|---|---|
| Munich | 16 November 2023 | Fronthaler, Hartwig |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 19 7881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG JINBAO ET AL: "Deep 3D human pose estimation: A review", COMPUTER VISION AND IMAGE UNDERSTANDING, ACADEMIC PRESS, US, vol. 210, 24 May 2021 (2021-05-24), XP086760494, ISSN: 1077-3142, DOI: 10.1016/J.CVIU.2021.103225 [retrieved on 2021-05-24] * abstract; figures 3,5; table 2 * * sections 3.1.1 - 3.1.2; pages 6-9 * | 1-15 | |

-----

TECHNICAL FIELDS
SEARCHED      (IPC)

The present search report has been drawn up for all claims

| Place of search | Date of completion of the search | Examiner |
|---|---|---|
| Munich | 16 November 2023 | Fronthaler, Hartwig |

EPO FORM 1503 03.82 (P04C01)

## ANNEX TO THE EUROPEAN SEARCH REPORT
## ON EUROPEAN PATENT APPLICATION NO.

**EP 23 19 7881**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-11-2023**

| Patent document cited in search report | | Publication date | Patent family member(s) | | Publication date |
|---|---|---|---|---|---|
| US 2021248772 | A1 | 12-08-2021 | CN | 113255420 A | 13-08-2021 |
| | | | US | 2021248772 A1 | 12-08-2021 |

EPO FORM P0459

For more details about this annex : see Official Journal of the European Patent Office, No. 12/82

**REFERENCES CITED IN THE DESCRIPTION**

**Patent documents cited in the description**

- US 63408037